# EUROPÄISCHE PATENTSCHRIFT

(11) **EP 1 344 984 B1**
(45) Veröffentlichungstag und Bekanntmachung des Hinweises auf die Patenterteilung: **11.04.2018**
(21) Anmeldenummer: 03003366.6
(22) Anmeldetag: 14.02.2003
(51) Int. Cl.: F24C 15/16, F24C 15/00

(54) **Schiene eines insbesondere teleskopartigen Auszugssystems für Garguträger eines Garofens und Auszugssystem**
Rail of a especially telescope-like drawing device for trays of cooking food of a cooking oven and drawing device
Rail d'un appareil de défournement en spécial téléscopique pour porteurs de cuisson d'un four cuisinière et appareil de défournement

(30) Priorität: 15.03.2002 DE 10211470
(43) Veröffentlichungstag der Anmeldung: 17.09.2003
(73) Patentinhaber: Electrolux Home Products Corporation N.V., 1130 Brussels (BE)
(72) Erfinder: Dänzer, Stefan, 91361 Wettringen (DE); Pörner, Harald, 91220 Schnaittach (DE); Turek, Richard, 90765 Fürth (DE); Michel, Herbert, 91613 Marktbergel (DE); Ebert, Bernd, 91608 Geslau (DE)
(74) Vertreter: Electrolux Group Patents

(56) Entgegenhaltungen:
- EP-A- 0 994 309
- DE-A1- 4 215 594
- DE-A1- 19 947 153
- DE-A1- 19 949 239
- DE-C1- 19 951 689

## Beschreibung

Die Erfindung betrifft eine Schiene eines insbesondere teleskopartigen Auszugssystems für Gargutträger eines Garofens und ein Auszugssystem.
Garöfen weisen in zunehmendem Umfang Auszugssysteme auf, mit denen Gargutträger in waagerechter Lage zwischen einer Garposition und einer Zugriffsposition bewegbar sind, wobei, wie beim Backwagen alle Gargutträger auf einmal, oder, wie bei Teleskopauszügen, alle Gargutträger unabhängig voneinander bewegbar sind. Hierzu besitzen die Backwagen und die Teleskopauszüge innerhalb der Ofenmuffel Schienen aus Edelstahl oder galvanisierten Oberflächen (NI, Cr), die im täglichen Betrieb durch Gargutspritzer, insbesondere Fettspritzer, welche bei den im Garofen herrschenden Temperaturen einbrennen, verschmutzen. Eine Reinigung im Ofen, im Spülbecken oder in der Spülmaschine führt zu keinem akzeptablen Ergebnis. Ein Einsatz von schmirgelnden Medien beschädigt die Oberfläche. Während es bekannt ist, glatte Muffelwandungen durch katalytische Flächen und glatte Gargutträger durch teflonbasierte Beschichtungen zu schützen, erfordern Auszugssysteme, die viele Schmutzkanten und schwer zugängliche Stellen haben, nach wie vor einen hohen Reinigungsaufwand.
Es sind Auszugs- oder Einschubvorrichtungen für Gargutträger im Garraum von Garöfen bekannt, bei denen Führungen und/oder darin geführte Schienen an ihren Gleitflächen einen Gleitwerkstoff aus PTFE aufweisen (EP 0 994 309 B1), Führungen eines Führungsformkörpers (DE 199 51 689 C1) oder Führungen und Führungsgitter (DE 199 47 153 A1) mit einer Gleit- oder Antiadhäsionsschicht aus PTFE beschichtet sind oder Laufflächen der Rollen oder Kugeln und/oder der Führungen und/oder Schienen zumindest an ihrer Oberfläche aus PTFE bestehen (DE 199 49 239 A1).
Der Erfindung liegt die Aufgabe zugrunde, den Reinigungsaufwand zu senken.
Erfindungsgemäß wird diese Aufgabe durch die Merkmale der Ansprüche 1 und 11 gelöst.

Als Schiene wird hier wie im folgenden sowohl eine raumfeste Schiene als auch eine an der raumfesten Schiene bewegliche Schiene angesehen, selbstverständlich auch eine Schiene, die an einer anderen beweglichen Schiene beweglich ist. Als PTFE-basierte Beschichtung wird hier wie im folgenden eine Beschichtung betrachtet, die vollständig oder überwiegend aus Polytetrafluoräthylen (PTFE) besteht.

Die Beschichtung ist ein- oder mehrlagig ausgeführt, wobei die oberen und/oder die durch das Gargut und/oder den Nutzer zugänglichen Bereiche eine mehrlagige Beschichtung, die insbesondere dreilagig ausgeführt ist, und die unteren und/oder die durch das Gargut und/oder den Nutzer nicht zugänglichen Bereiche eine einlagige Beschichtung aufweisen.
Eine solche Schiene kann insbesondere an einem Träger angeordnet sein, der vorzugsweise mit einer PTFE-basierten Beschichtung versehen und an einer vorzugsqweise PTFE-basiert beschichteten Muffelwandung angeordnet ist.
Die Beschichtung besteht insbesondere aus Durit Resist und/oder aus Ilaflon Resist. Erstere ist vorzugsweise mehrlagig, letztere vorzugsweise einlagig. Die Schiene besteht insbesondere aus Aluminium und/oder Edelstahl und/oder aluminisiertem Stahl und/oder verchromtem Stahl. Sie kann zur Reinigung aus dem Garofen entnommen und in einer Geschirrspülmaschine gereinigt werden.
Das Auszugssystem besitzt
- Halte- und Auszugsmittel, mit denen Gargutträger in waagerechter Lage zwischen einem Garbereich und einem Zugriffsbereich bewegbar sind, wobei
- die Halte- und/oder Auszugsmittel zumindest teilweise eine PTFE-basierte Beschichtung aufweisen.

Auch hier ist die Beschichtung wie vorbeschrieben ausgeführt, während die Halte- und/oder Auszugsmittel insbesondere aus Aluminium und/oder Edelstahl und/oder aluminisiertem Stahl und/oder verchromtem Stahl bestehen. Vorzugsweise besitzen die Auszugsmittel wenigstens eine vorbeschriebene Schiene. Sie können aber auch entsprechend beschichtete Träger aufweisen. Wenigstens die Halte- und/oder Auszugsmittel lassen sich aus dem Garofen entnehmen und in einer Geschirrspülmaschine reinigen.

Schließlich ist eine Garofenmuffel mit wenigstens einer der vorbeschriebenen Schienen und/oder einem der vorbeschriebenen Auszugssysteme vorgesehen.

Die Erfindung wird nachstehend anhand eines Ausführungsbeispiels näher erläutert. In den zugehörigen Zeichnungen zeigen:

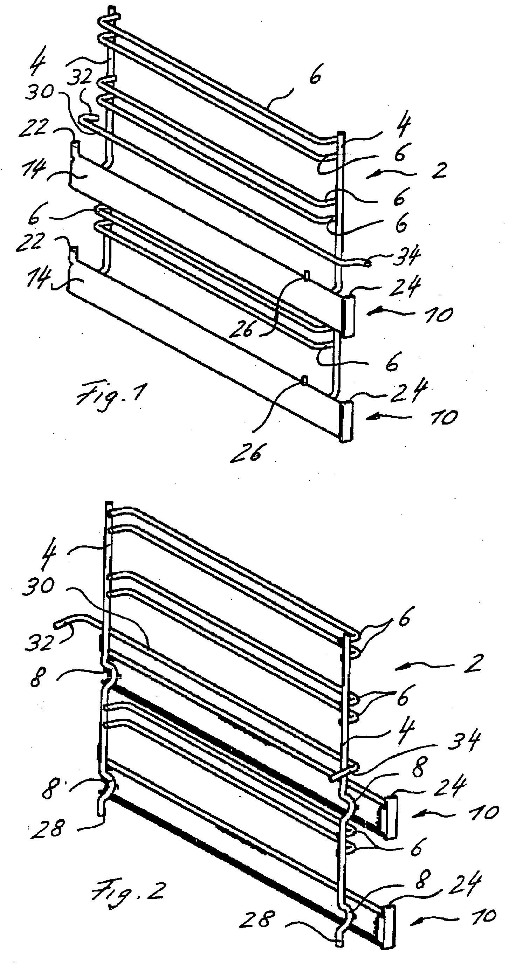

Fig. 1 ein in eine Muffelwandung einhängbares Führungsgitter von schräg vorn,
Fig. 2 das Führungsgitter von schräg hinten,
Fig. 3 das Führungsgitter von vorn mit geschnittenen Einfachauszügen,
Fig. 4 den geschnittenen Einfachauszug als Einzelheit,
Fig. 5 ein Führungsgitter von vorn mit geschnittenen Vollauszügen,
Fig. 6 den geschnittenen Vollauszug in Einzelheit.

Die an nichtdargestellten gegenüberliegenden Muffelwandungen spiegelbildlich zueinander angeordneten Führungsgitter 2 weisen jeweils zwei voneinander beabstandete senkrechte Längsstäbe 4 auf, die durch horizontale Querstäbe 6 miteinander verbunden sind, vorzugsweise durch Schweißen. Zwischen je zwei Querstäben 6 ist ein nichtdargestellter Gargutträger einschiebbar. An muffelwandungsabgewandten Stauchungen 8 der Längsstäbe 4 sind übereinander zwei Einfachauszüge 10 befestigt, die jeweils aus einer feststehenden Schiene 12 und einer beweglichen Schiene 14 bestehen, welche aneinander über Kugeln 16 laufen.

Auf ein Paar gegenüberliegend geführter Schienen 14 ist ein nichtdargestellter Gargutträger auflegbar, um diesen aus einem in der Ofenmuffel liegenden Garbereich in einen zumindest abschnittsweise vor der Ofenmuffel liegenden Zugriffsbereich herauszuziehen und nach dem Prüfen, Bestücken oder Wechseln wieder in den Garbereich hineinzuschieben.

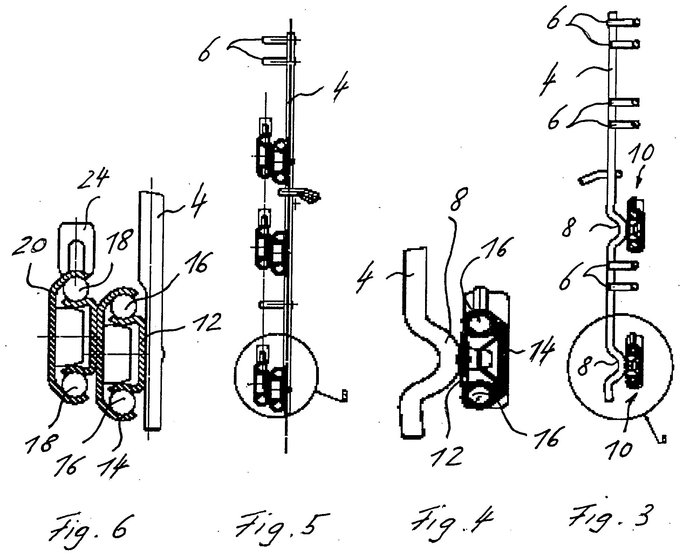

Ein längerer Auszugsweg ergibt sich, wenn, wie in den Figuren 5 und 6 gezeigt, an der beweglichen Schiene 14 über Kugeln 18 eine weitere bewegliche Schiene 20 geführt ist, um den Gargutträger aufzunehmen.

Zur sicheren Aufnahme der Gargutträger weisen die entsprechenden Schienen 14 und 20 hintere Anschläge 22, vordere Anschläge 24 und Arretierbolzen 26 auf, die allesamt nach oben gerichtet sind.

Die Kugeln 16 und 18 sind vorzugsweise in Kugelkäfigen 28 aufgenommen. Die Gitter 2 bestehen aus Aluminium oder verchromtem Stahl, die Schienen 12, 14, 20 aus Edelstahl.

Die Schienen 12, 14, 20 können untereinander und/oder mit dem Gitter 2 lösbar verbunden sein, das Gitter 2 wiederum mit der nichtdargestellten Muffelwandung. Das Gitter 2 weist hierzu an den Längsstäben 4 untere Abschnitte 28 auf, die auf den nichtdargestellten Ofenmuffelboden aufsetzbar oder in diesen einsteckbar sind, und einen Querstab 30 auf, der mit seinen gekröpften Enden 32 und 34 in die nichtdargestellte Ofenmuffelwandung einsteckbar ist. Alternative Lösungen sind Schraub- und/oder Schnappverbindungen.

Obwohl nicht für die Gargutaufnahme vorgesehen, sind erfindungsgemäß auch die die Gargutträger führenden Schienen 12, 14, 20 und gegebenenfalls auch die die Schienen tragenden Gitter 2 mit leicht zu reinigenden PTFE-basierten Beschichtungen versehen. Bei nichtdargestellten Backwagen können neben den Schienen auch diejenigen Bauteile PTFE-basiert beschichtet sein, die die Gargutträger tragen. Lediglich die Kugeln und eventuell vorhandene Kugelkäfige bleiben unbeschichtet.

Neben der leichten Reinigbarkeit ergeben sich aus derPTFEbasierten Beschichtung auch Vorteile im Hinblick auf eine größere Laufruhe des Auszugssystems, da die Beschichtung auch als Geräuschdämpfung wirkt, indem sie die unbeschichteten Wälzelemente elastisch aufnimmt.

Je nach Zugänglichkeit der Teile für vagabundierendes Gargut und/oder den Nutzer sind unterschiedliche Beschichtungsqualitäten vorgesehen. So lassen sich Bauteilbereiche, die nach unten weisen, mit einer im Hinblick auf Reinigbarkeit und/oder Abriebfestigkeit geringeren Beschichtungsqualität ausrüsten, als nach oben weisende Bauteilbereiche, die Gargutspritzern unmittelbarer ausgesetzt sind. Entsprechend kann abzuwägen sein, inwieweit Bauteilbereiche, die dem Nutzer zugänglich sind, anders beschichtet werden, als Bauteilbereiche, bei denen dies nicht so ist. Dies gilt insbesondere dann, wenn die Bauteile zur Reinigung nicht entnehmbar sind. Die Beschichtungsqualitäten können über die Anzahl der Beschichtungslagen und/oder über die Materialeigenschaften der Beschichtung eingestellt werden, wobei eine größere Anzahl der Beschichtungslagen für eine bessere Beschichtungsqualität spricht.

Ein Beispiel für eine preiswertere Beschichtung ist das Einschichtsystem Ilaflon Resist, ein Beispiel für eine anspruchsvollere und damit teurere Beschichtung ist das Dreischichtsystem Durit Resist. Beide Beschichtungsmaterialien werden von der schweizer Firma ILAG Industrielack AG angeboten. Sie lassen es zu, die Auszugssysteme entweder aus fertig beschichtetem Material herzustellen oder nach der Herstellung zu beschichten. PTFE-basierte Beschichtungen weisen eine hohe Abrieb- bzw. Kratzfestigkeit, einen sehr guten Antihafteffekt und eine Temperaturbeständigkeit bis etwa 250 °C auf.

## Patentansprüche

1. Schiene eines insbesondere teleskopartigen Auszugssystems für Gargutträger eines Garofens, die zumindest teilweise eine PTFE-basierte Beschichtung aufweist, wobei die Beschichtung ein- oder mehrlagig ausgeführt ist, **dadurch gekennzeichnet, dass** die oberen und/oder die durch das Gargut und/oder den Nutzer zugänglichen Bereiche eine mehrlagige Beschichtung aufweisen und die unteren und/oder durch das Gargut und/oder den Nutzer nicht zugänglichen Bereiche eine einlagige Beschichtung aufweisen.

2. Schiene nach Anspruch 1, bei der die mehrlagige Beschichtung dreilagig ausgeführt ist.

3. Schiene nach einem der Ansprüche 1 bis 2, bei der insbesondere die mehrlagige Beschichtung aus Durit Resist besteht.

4. Schiene nach einem der Ansprüche 1 bis 3, bei der insbesondere die einlagige Beschichtung aus Ilaflon Resist besteht.

5. Schiene nach einem der Ansprüche 1 bis 4, wobei diese aus Aluminium und/oder Edelstahl und/oder aluminisiertem Stahl und/oder verchromtem Stahl besteht.

6. Schiene nach einem der Ansprüche 1 bis 5, die zur Reinigung aus dem Garofen entnehmbar ist.

7. Schiene nach einem der Ansprüche 1 bis 6, die in einer Geschirrspülmaschine reinigbar ist.

8. Schiene nach einem der Ansprüche 1 bis 7, wobei die Schiene (12, 14, 20) an einem Träger (2) anordenbar ist, der zumindest teilweise eine PTFE-basierte Beschichtung aufweist.

9. Schiene nach Anspruch 8, bei der der Träger an einer Muffelwandung anordenbar ist, die insbesondere eine leicht zu reinigende Beschichtung, vorzugsweise eine PTFE-basierte Beschichtung, aufweist.

10. Schiene nach einem der Ansprüche 1 bis 9, bei der die Beschichtung vollständig oder teilweise ausgeführt ist.

11. Auszugssysteme, mit Halte- und Auszugsmitteln (12 bis 26), mit denen Gargutträger in waagerechter Lage zwischen einem Garbereich und einem Zugriffsbereich bewegbar sind, wobei die Halte- und/oder Auszugsmitteln (12 bis 26) zumindest teilweise eine PTFE-basierte Beschichtung aufweisen, wobei die Beschichtung ein- oder mehrlagig ausgeführt ist, **dadurch gekennzeichnet, dass** die oberen und/oder die durch das Gargut und/oder den Nutzer zugänglichen Bereiche eine mehrlagige Beschichtung aufweisen und die unteren und/oder die durch das Gargut und/oder den Nutzer nicht zugänglichen Bereiche eine einlagige Beschichtung aufweisen.

12. Auszugssystem nach Anspruch 11, bei der die mehrlagige Beschichtung dreilagig ausgeführt ist.

13. Auszugssystem nach einem der Ansprüche 11 bis 12, bei der insbesondere die mehrlagige Beschichtung aus Durit Resist besteht.

14. Auszugssysteme nach einem der Ansprüche 11 bis 13, bei der insbesondere die einlagige Beschichtung aus Ilaflon Resist besteht.

15. Auszugssystem nach einem der Ansprüche 11 bis 14, bei der die Halte- und/oder Auszugsmittel (12 bis 26) aus Aluminium und/oder Edelstahl und/oder aluminisiertem Stahl und/oder verchromtem Stahl bestehen.

16. Auszugssystem nach einem der Ansprüche 11 bis 15, bei der die Halte- und/oder Auszugsmittel (12 bis 26) wenigstens eine Schiene nach einem der Ansprüche 1 bis 10 aufweisen.

17. Auszugssystem nach einem der Ansprüche 11 bis 16, bei dem wenigstens die Halte- und/oder Auszugsmittel (12 bis 26) zur Reinigung aus dem Garofen entnehmbar sind.

18. Auszugssystem nach einem der Ansprüche 11 bis 17, bei dem wenigstens die Halte- und/oder Auszugsmitteln (12 bis 26) in einer Geschirrspülmaschine reinigbar sind.

19. Garofenmuffel mit wenigstens einer Schiene (12, 14, 20) nach einem der Ansprüche 1 bis 10 und/oder wenigstens einem Auszugssystem (12 bis 26) nach einem der Ansprüche 11 bis 18.

## Claims

1. Rail of an in particular telescope-like withdrawal system for trays of cooking food of a cooking oven, which rail has at least in part a PTFE-based coating, wherein the coating is single-layer or multi-layer, **characterized in that** the upper regions and/or the regions accessible to the food and/or to the user have a multi-layer coating and the lower regions and/or the regions not accessible to the food and/or to the user have a single-layer coating.

2. Rail according to Claim 1, in which the multi-layer coating has three layers.

3. Rail according to either of Claims 1 and 2, in which in particular the multi-layer coating consists of Durit Resist.

4. Rail according to one of Claims 1 to 3, in which in particular the single-layer coating consists of Ilaflon Resist.

5. Rail according to one of Claims 1 to 4, wherein the rail consists of aluminium and/or stainless steel and/or aluminized steel and/or chromed steel.

6. Rail according to one of Claims 1 to 5, which can be removed from the cooking oven for cleaning.

7. Rail according to one of Claims 1 to 6, which can be cleaned in a dishwasher.

8. Rail according to one of Claims 1 to 7, wherein the rail (12, 14, 20) can be arranged on a support (2) which has at least in part a PTFE-based coating.

9. Rail according to Claim 8, in which the support can be arranged on a muffle wall, which in particular has an easy-to-clean coating, preferably a PTFE-based coating.

10. Rail according to one of Claims 1 to 9, in which the coating is carried out entirely or partially.

11. Withdrawal system, having holding and withdrawal means (12 to 26), with which trays of cooking food can be moved in the horizontal position between a cooking region and a grasping region, wherein the holding and/or withdrawal means (12 to 26) have at least in part a PTFE-based coating, wherein the coating is single-layer or multi-layer, **characterized in that** the upper regions and/or the regions accessible to the food and/or to the user have a multi-layer coating and the lower regions and/or the regions not accessible to the food and/or to the user have a single-layer coating.

12. Withdrawal system according to Claim 11, in which the multi-layer coating has three layers.

13. Withdrawal system according to either of Claims 11 and 12, in which in particular the multi-layer coating consists of Durit Resist.

14. Withdrawal system according to one of Claims 11 to 13, in which in particular the single-layer coating consists of Ilaflon Resist.

15. Withdrawal system according to one of Claims 11 to 14, wherein the holding and/or withdrawal means (12 to 26) consists of aluminium and/or stainless steel and/or aluminized steel and/or chromed steel.

16. Withdrawal system according to one of Claims 11 to 15, in which the holding and/or withdrawal means (12 to 26) have at least one rail according to one of Claims 1 to 10.

17. Withdrawal system according to one of Claims 11 to 16, in which the holding and/or withdrawal means (12 to 26) can be removed from the cooking oven for cleaning.

18. Withdrawal system according to one of Claims 11 to 17, in which the holding and/or withdrawal means (12 to 26) can cleaned in a dishwasher.

19. Cooking oven muffle having at least one rail (12, 14, 20) according to one of Claims 1 to 10, and/or at least one withdrawal system (12 to 26) according to one of Claims 11 to 18.

## Revendications

1. Rail d'un système de défournement en particulier télescopique pour des supports de produits à cuire d'un four de cuisson, qui présente au moins en partie un revêtement à base de PTFE, dans lequel le revêtement est réalisé en une ou plusieurs couche(s), **caractérisé en ce que** les régions supérieures et/ou accessibles au produit à cuire et/ou à l'utilisateur présentent un revêtement multicouche et les régions inférieures et/ou non accessibles au produit à cuire et/ou à l'utilisateur présentent un revêtement monocouche.

2. Rail selon la revendication 1, dans lequel le revêtement multicouche est réalisé à trois couches.

3. Rail selon une des revendications 1 à 2, dans lequel le revêtement multicouche se compose en particulier de Durit Resist.

4. Rail selon l'une quelconque des revendications 1 à 3, dans lequel le revêtement monocouche se compose en particulier d'Ilaflon Resist.

5. Rail selon l'une quelconque des revendications 1 à 4, dans lequel il se compose d'aluminium et/ou d'acier allié et/ou d'acier aluminié et/ou d'acier chromé.

6. Rail selon l'une quelconque des revendications 1 à 5, qui peut être retiré du four de cuisson pour le nettoyage.

7. Rail selon l'une quelconque des revendications 1 à 6, qui peut être nettoyé dans un lave-vaisselle.

8. Rail selon l'une quelconque des revendications 1 à 7, dans lequel le rail (12, 14, 20) peut être disposé sur un support (2), qui présente au moins en partie un revêtement à base de PTFE.

9. Rail selon la revendication 8, dans lequel le support peut être disposé sur une paroi de moufle, qui présente en particulier un revêtement facile à nettoyer, de préférence un revêtement à base de PTFE.

10. Rail selon l'une quelconque des revendications 1 à 9, dans lequel le revêtement est réalisé entièrement ou partiellement.

11. Système de défournement, comportant des moyens de maintien et de défournement (12 à 26), avec lesquels des supports de produits à cuire sont déplaçables en position horizontale entre une zone de cuisson et une zone d'accès, dans lequel les moyens de maintien et/ou de défournement (12 à 26) présentent au moins en partie un revêtement à base de PTFE, dans lequel le revêtement est réalisé en une ou plusieurs couche(s), **caractérisé en ce que** les régions supérieures et/ou accessibles au produit à cuire et/ou à l'utilisateur présentent un revêtement multicouche et les régions inférieures et/ou non accessibles au produit à cuire et/ou à l'utilisateur présentent un revêtement monocouche.

12. Système de défournement selon la revendication 11, dans lequel le revêtement multicouche est réalisé à trois couches.

13. Système de défournement selon une des revendications 11 à 12, dans lequel le revêtement multicouche se compose en particulier de Durit Resist.

14. Système de défournement selon l'une quelconque des revendications 11 à 13, dans lequel le revêtement monocouche se compose en particulier d'Ilaflon Resist.

15. Système de défournement selon l'une quelconque des revendications 11 à 14, dans lequel les moyens de maintien et/ou de défournement (12 à 26) se composent d'aluminium et/ou d'acier allié et/ou d'acier aluminié et/ou d'acier chromé.

16. Système de défournement selon l'une quelconque des revendications 11 à 15, dans lequel les moyens de maintien et/ou de défournement (12 à 26) présentent au moins un rail selon l'une quelconque des revendications 1 à 10.

17. Système de défournement selon l'une quelconque des revendications 11 à 16, dans lequel au moins les moyens de maintien et/ou de défournement (12 à 26) peuvent être retirés du four de cuisson pour le nettoyage.

18. Système de défournement selon l'une quelconque des revendications 11 à 17, dans lequel au moins les moyens de maintien et/ou de défournement (12 à 26) peuvent être nettoyés dans un lave-vaisselle.

19. Moufle de four de cuisson avec au moins un rail (12, 14, 20) selon l'une quelconque des revendications 1 à 10 et/ou au moins un système de défournement (12 à 26) selon l'une quelconque des revendications 11 à 18.
